# NEUE EUROPÄISCHE PATENTSCHRIFT

(11) **EP 0 858 935 B2**
(45) Veröffentlichungstag und Bekanntmachung des Hinweises auf die Entscheidung über den Einspruch: **08.06.2005**
(45) Hinweis auf die Patenterteilung: 17.04.2002
(21) Anmeldenummer: 98100702.4
(22) Anmeldetag: 16.01.1998
(51) Int. Cl.: B60R 22/46

(54) **Fahrzeuginsassen-Rückhaltesystem**
Vehicle occupant restraint system
Dispositif de retenue d'un passager de véhicule

(30) Priorität: 07.02.1997 DE 29702125 U
(43) Veröffentlichungstag der Anmeldung: 19.08.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- DE-A- 3 343 325
- DE-U- 8 525 935
- US-A- 5 492 368
- US-A- 5 566 978

## Beschreibung

Die Erfindung betrifft ein Fahrzeuginsassen-Rückhaltesystem mit den Merkmalen des Oberbegriffs der Ansprüche 1 oder 2.

Fahrzeuginsassen-Rückhaltesysteme, die einen Sicherheitsgurt umfassen, sind inzwischen selbst in Kleinwagen oft mit einem Gurtstraffer versehen, der den Sicherheitsgurt im Rückhaltefall so strafft, daß der Gurt möglichst eng am Körper des Fahrzeuginsassen anliegt. Bislang übliche Gurtstraffer gibt es als Aufrollstraffer, Schloßstraffer oder Endbeschlagstraffer. Diese sind an unterschiedlichen Stellen im Fahrzeug befestigt und leiten die von ihnen ausgeübte Kraft entsprechend an unterschiedlichen Stellen in das Gurtsystem ein.

In der; für Anspruch 2, gattungsgemäßen DE 33 43 325 A1 ist ein Fahrzeuginsassen-Rückhaltesystem mit zwei Gurtstraffern beschrieben, die durch einen fahrzeugsensitiven Sensor ausgelöst werden. Die zeitliche Abfolge der Auslösung der beiden Gurtstraffer läßt sich durch die Abmessungen und Anordnung von Gasdruckrohren fest voreinstellen.

In der, für Anspruch 1, gattungsgemäßen US 5 492 368 ist ein Fahrzeuginsassen-Rückhaltesystem mit zwei Gurtstraffern offenbart. Die Gurtstraffer sind mit einer fahrzeugsensitiven Sensorsteuerung verbunden, die gleichzeitig ein Auslösesignal an beide Gurtstraffer sendet, um beide Gurtstraffer zur Erzielung einer Straffwirkung vor dem Einsetzen einer Vorwärtsbewegung des Fahrzeuginsassen zu zünden.

Die US 5 566 978 zeigt ein Fahrzeuginsassen-Rückhaltesystem mit einem Gurtstraffer und fahrzeugsensitiven Sensoren, die eine Unfallsituation detektieren können. Weiterhin sind Sensoren, die die körperliche Konstitution eines Fahrzeuginsassen und die Sitzposition eines Fahrzeuginsassen ermitteln, vorgesehen. Aufgrund der Daten der letztgenannten Sensoren wird ein höhenverstellbarer Anschlag für einen Gurtumlenkbeschlag eingestellt, bis zu dem sich der Umlenkbeschlag im Fall der Aktivierung des Gurtstraffers bewegen kann.

Die Erfindung schafft ein Fahrzeuginsassen-Rückhaltesystem, dessen Rückhaltewirkung gegenüber bislang üblichen Rückhaltesystemen deutlich besser ist.

Dies wird durch ein Fahrzeuginsassen-Rückhaltesystem mit den Merkmalen des Anspruchs 1 bzw. des Anspruchs 2 erreicht.

Das erfindungsgemäße Fahrzeuginsassen-Rückhaltesystem arbeitet mit zwei auf ein Gurtband wirkenden Gurtstraffern, von denen der eine überwiegend für das Straffen des Schultergurtabschnittes und der andere überwiegend für das Straffen des Beckengurtabschnittes zuständig ist. Reibungsverluste, wie sie insbesondere bei einem Aufrollstraffer wegen der Umlenkung des Gurtbandes am Umlenkbeschlag im Bereich der B-Säule und an der Steckzunge auftreten, werden beim erfindungsgemäßen Fahrzeuginsassen-Rückhaltesystem weitgehend vermieden. Die beiden vorgesehenen Gurtstraffer können jeweils für sich kompakter als ein bislang üblicher Gurtstraffer ausgebildet sein, so daß sich Vorteile für die Unterbringung der Gurtstraffer im Fahrzeug ergeben. Durch das Vorsehen von mehreren Gurtstraffern kann ferner die für den Straffvorgang erforderliche Zeit reduziert werden. Insbesondere Aufrollstraffer hatten ferner den Nachteil, daß der Beckengurtabschnitt oft aufgrund des langen Kraftweges bis zu ihm und aufgrund der Elastizität eines Gurtbandes unzureichend gestrafft wurde. Durch die unmittelbare Einleitung einer Strafferkraft separat auch in den Beckengurtabschnitt wird das Auftreten einer Gurtlose in diesem Bereich nach dem Straffvorgang vermieden und ein Verdrehen des Unterleibs sowie ein Hindurchgleiten des Insassen unter den Beckengurtabschnitt verhindert. Die Steuerungseinheit ist mit Sensoren gekoppelt, die die Konstitution des Insassen, d.h. zum Beispiel sein Gewicht oder seine Größe, die Sitzposition des Insassen oder Umgebungsbedingungen wie Fahrzeuginnen- und Außentemperatur ermitteln. In Abhängigkeit von einem oder mehreren dieser Faktoren bzw. der Crashschwere wird einer der beiden Gurtstraffer oder beide Gurtstraffer aktiviert. Beim Vorsehen eines pyrotechnischen Gurtstraffers mit mehreren Stufen kann die Strafferkraft zudem durch Zünden von einer oder mehreren Stufen auf die Situation im Rückhaltefall abgestimmt werden.

Gemäß der bevorzugten Ausführungsform weist wenigstens einer der beiden Gurtstraffer einen Kraftbegrenzer auf, so daß auch die maximale auf den Insassen bei der Rückhaltung ausgeübte Kraft begrenzt wird. Vorzugsweise ist wenigstens der Aufrollstraffer mit einem Kraftbegrenzer versehen, um die sogenannten HIC-Werte im Bereich des Oberkörpers und des Kopfes des Insassen zu verringern.

Um die maximal auftretenden Beschleunigungswerte weiter zu reduzieren, kann es vorteilhaft sein, wenn die Steuerungseinheit die beiden Gurtstraffer im Rückhaltefall zeitlich versetzt zueinander aktiviert, was von der Sitz- oder Fahrzeugstruktur abhängig ist.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1 eine erste Ausführungsform des erfindungsgemäßen Fahrzeuginsassen-Rückhaltesystems mit einem Aufrollstraffer und einem Schloßstraffer; und
- Figur 2 eine zweite Ausführungsform des erfindungsgemäßen Fahrzeuginsassen-Rückhaltesystems mit einem Aufrollstraffer und einem Endbeschlagstraffer.

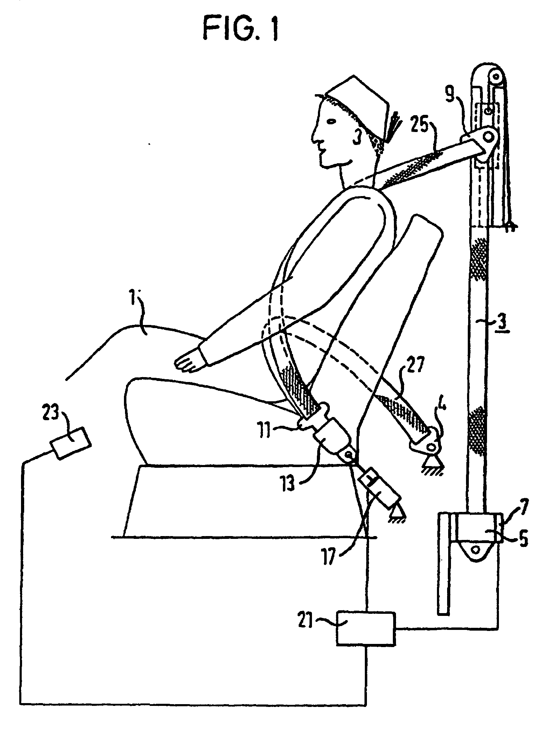

In Figur 1 ist ein Fahrzeuginsasse 1 gezeigt, der in einem Rückhaltefall durch das ebenfalls dargestellte Fahrzeuginsassen-Rückhaltesystem an der Vorverlagerung relativ zum Fahrzeug gehindert werden soll. Das Fahrzeuginsassen-Rückhaltesystem umfaßt ein Gurtband 3, welches an einem Ende über einen Endbeschlag 4 und am anderen Ende über einen Gurtaufroller 5 am Fahrzeug befestigt ist. Der Gurtaufroller 5 ist mit einem Aufrollstraffer 7 versehen. Vom Gurtaufroller 5 aus verläuft das Gurtband 3 vertikal aufwärts bis zu einem höhenverstellbaren Umlenkbeschlag 9 und von diesem aus schräg über den Oberkörper des Insassen bis zu einer Steckzunge 11, die in einem Gurtschloß 13 verriegelt werden kann. Durch einen Bügelabschnitt in der Steckzunge 11 hindurch erstreckt sich das Gurtband 3 vorderhalb des Beckens des Fahrzeuginsassen 1 bis zum fahrzeugfesten Endbeschlag 4.

Das Gurtschloß 13 ist mit einem Schloßstraffer 17 gekoppelt, der, ebenso wie der Aufrollstraffer 7, als mehrstufiger Gurtstraffer ausgebildet ist, indem ermehrere pyrotechnische Treibsätze aufweist. Die Treibsätze des Schloßstraffers 17 sind ebenso wie pyrotechnische Treibsätze des Aufrollstraffers 7 im Rückhaltefall einzeln oder zusammen gleichzeitig zündbar. Die Steuerungseinheit 21 ist darüber hinaus mit mehreren Sensoren verbunden, von denen nur ein Sensor 23 gezeigt ist. Diese Sensoren 23 erfassen nicht nur die Sitzposition des Fahrzeuginsassen, sondern auch seine körperliche Konstitution, wie zum Beispiel Größe und Gewicht, also Faktoren, die zur Berechnung einer optimalen, auf den Insassen selbst abgestimmten Rückhaltekraft einen Einfluß haben. Darüber hinaus sind fahrzeugsensitive Sensoren, zum Beispiel Crash-Sensoren vorgesehen, die die Aufprallintensität bestimmen. Über Temperatursensoren wird die Temperatur innerhalb und außerhalb des Fahrzeugs gemessen. Damit kann mit hoher Wahrscheinlichkeit auf die Kleidung, die der Fahrzeuginsasse trägt, geschlossen werden. Bei tiefen Temperaturen kann zum Beispiel angenommen werden, daß der Insasse eine dickere Kleidung trägt, so daß ein größerer Straffweg vorteilhaft wäre.

Abhängig von den obengenannten Faktoren wird im Rückhaltefall in der Steuerungseinheit 21 die Aktivierung der Gurtstraffer initiiert, wobei zum Beispiel bei einem leichteren Unfall nur eine Stufe, d.h. nur ein Treibsatz gezündet wird.

Darüber hinaus werden der Aufrollstraffer 7 und der Schloßstraffer 17 nicht gleichzeitig, sondern zeitlich versetzt zueinander aktiviert, was den Vorteil hat, daß durch die Gurtstraffung nicht zu hohe Kräfte auf den Fahrzeuginsassen 1 ausgeübt werden.

Der Aufrollstraffer 7 sorgt insbesondere für eine Straffung eines sich zwischen dem Umlenkbeschlag 9 und dem der Steckzunge 11 erstreckenden Schultergurtabschnittes 25. Der Schloßstraffer 17 hingegen wirkt gleichermaßen auf den Schultergurtabschnitt 25 wie auf einen sich zwischen dem Endbeschlag 4 und der Steckzunge 11 erstreckenden Beckengurtabschnitt 27.

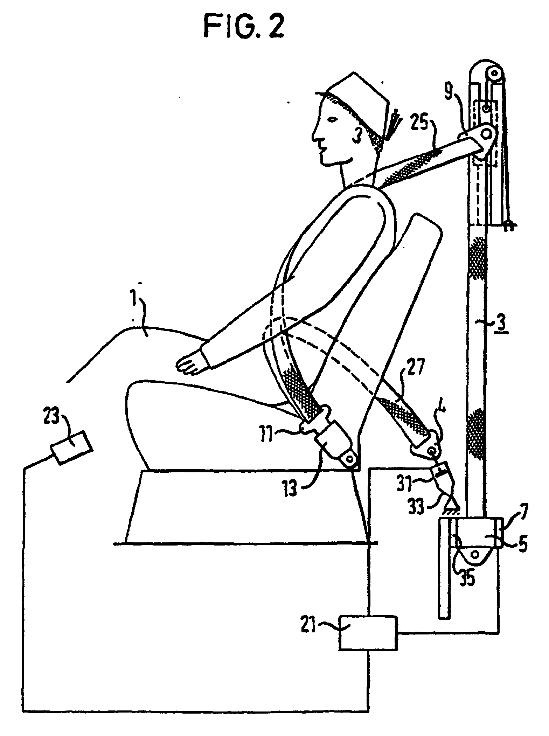

Die in Figur 2 gezeigte Ausführungsform entspricht im wesentlichen der in Figur 1 gezeigten, so daß gleiche Teile auch mit gleichen Bezugszahlen versehen sind und auf diese Teile im folgenden nicht näher eingegangen wird. Anstatt des Schloßstraffers ist die in Figur 2 gezeigte Ausführungsform des Fahrzeuginsassen-Rückhaltesystems mit einem Endbeschlagstraffer 31 ausgestattet, in den ein Kraftbegrenzer 33 integriert ist, was durch die konisch zulaufende Innenseite eines Strafferrohres angedeutet ist. Der Aufrollstraffer 5 weist ebenfalls einen integrierten Kraftbegrenzer 35 auf. Durch die Kraftbegrenzer 33, 35 kann die im Rückhaltefall auf den Insassen 1 ausgeübte Kraft begrenzt werden. Bei der in Figur 2 gezeigten Ausführungsform sorgt der Aufrollstraffer 5 überwiegend für eine Straffung des Schulterbandabschnittes 25, wogegen der Endbeschlagstraffer 31 für eine Straffung des Beckengurtabschnittes 27 sorgt.

Insbesondere wenn der Beckengurtabschnitt 27 nicht eng genug am Körper des Insassen 1 anliegt, kann es im Rückhaltefall, gerade bei schrägem Aufprall des Fahrzeugs zu einem Verdrehen des Beckenbereichs des Insassen führen, was durch das in den Figuren 1 und 2 dargestellte Fahrzeuginsassen-Rückhaltesystem mit zwei Gurtstraffern vermieden wird.

Ist die Sitzposition oder Sitz- und Fahrzeug-Struktur derart, daß es sehr leicht zu einem Hindurchgleiten des Insassen unter den Beckengurtabschnitt 27, zu einem sogenannten Submarine-Effekt kommt, wird vorzugsweise zuerst der Schloßstraffer 17 oder der Endbeschlagstraffer 31 aktiviert.

Hat sich der Fahrzeuginsasse vor einem Fahrzeugaufprall mit seinem Oberkörper nach vorne gelehnt, ist es sinnvoll, wenn zuerst der Aufrollstraffer 5 betätigt wird, um den Oberkörper des Insassen 1 durch den dann eng anliegenden Schultergurtabschnitt 25 soweit wie möglich zu stabilisieren.

## Patentansprüche

1. Fahrzeuginsassen-Rückhaltesystem, mit einem Gurtband (3), einem Gurtaufroller (5), einem Gurtschloß (13), einer Steckzunge (11),
einem ersten und einem zweiten Gurtstraffer, von denen der erste Gurtstraffer ein Aufrollstraffer (7) und der zweite Gurtstraffer ein Schloßstraffer (17) ist,
und wenigstens einer mit den beiden Gurtstraffern (7, 17) gekoppelten Steuerungseinheit (21), die die beiden Gurtstraffer (7, 17) im Rückhaltefall aktivieren kann,
**dadurch gekennzeichnet, daß** die Steuerungseinheit (21) mit wenigstens einem fahrzeugsensitiven Sensor (23)
und wenigstens einem der folgenden Sensoren verbunden ist:
- einem Sensor (23) zur Ermittlung der körperlichen Konstitution eines Fahrzeuginsassen,
- einem Sensor zur Ermittlung der Sitzposition des Fahrzeuginsassen,
- einem Sensor zur Ermittlung der Temperatur innerhalb oder außerhalb des Fahrzeugs,
und daß die Steuerungseinheit (21) so ausgebildet ist, daß sie in Abhängigkeit von den durch die Sensoren ermittelten Werten entweder einen oder beide Gurtstraffer (7, 17) aktiviert.

2. Fahrzeuginsassen-Rückhaltesystem, mit einem Gurtband (3), einem Gurtaufroller (5), einem Gurtschloß (13), einer Steckzunge (11),
zwei Gurtstraffern, von denen einer ein Aufrollstraffer (7) und der andere ein Endbeschlagstraffer (31) ist,
und wenigstens einer mit den beiden Gurtstraffern (7, 31) gekoppelten Steuerungseinheit (21), die die beiden Gurtstraffer (7, 31) im Rückhaltefall aktivieren kann,
**dadurch gekennzeichnet, daß** die Steuerungseinheit (21) mit wenigstens einem fahrzeugsensitiven Sensor (23)
und wenigstens einem der folgenden Sensoren verbunden ist:
- einem Sensor (23) zur Ermittlung der körperlichen Konstitution eines Fahrzeuginsassen,
- einem Sensor zur Ermittlung der Sitzposition des Fahrzeuginsassen,
- einem Sensor zur Ermittlung der Temperatur innerhalb oder außerhalb des Fahrzeugs,
und daß die Steuerungseinheit (21) so ausgebildet ist, daß sie in Abhängigkeit von den durch die Sensoren ermittelten Werten entweder einen oder beide Gurtstraffer (7, 31) aktiviert.

3. Fahrzeuginsassen-Rückhaltesystem nach Anspruch 1 oder 2, **dadurch gekennzeichnet, daß** wenigstens einer der beiden Gurtstraffer (7, 17; 31) einen Kraftbegrenzer (33, 35) aufweist.

4. Fahrzeuginsassen-Rückhaltesystem nach einem der vorstehenden Ansprüche, **dadurch gekennzeichnet, daß** die Steuerungseinheit (21) die Gurtstraffer (7, 17; 31) im Rückhaltefall zeitlich versetzt zueinander aktiviert.

5. Fahrzeuginsassen-Rückhaltesystem nach einem der vorstehenden Ansprüche, **dadurch gekennzeichnet, daß** wenigstens einer der Gurtstraffer (7, 17; 31) als mehrstufiger, pyrotechnischer Gurtstraffer ausgebildet ist, dessen Stufen unabhängig voneinander ausgelöst werden können.

## Claims

1. A vehicle occupant restraint system comprising a belt webbing (3), a belt retractor (5), a belt buckle (13), an insertion tongue (11),
first and second belt tensioners, of which the first belt tensioner is a retractor tensioner (7) and the second belt tensioner is a buckle tensioner (17),
and at least one control unit (21) which is coupled to said two belt tensioners (7, 17) and is adapted to activate said two belt tensioners (7, 17) in a restraint situation,
**characterized in that** said control unit (21) is connected with at least one vehicle-sensitive sensor (23)
and at least one of the following sensors:
- a sensor (23) for sensing the bodily constitution of a vehicle occupant,
- a sensor for sensing the seating position of said vehicle occupant,
- a sensor for sensing the temperature inside or outside of the vehicle,
and that said control unit (21) is configured such that it activates either one or both of said belt tensioners (7, 17) depending on the values sensed by the sensors.

2. A vehicle occupant restraint system comprising a belt webbing (3), a belt retractor (5), a belt buckle (13), an insertion tongue (11),
two belt tensioners, one of which is a retractor tensioner (7) and the other an end fitting tensioner (31),
and at least one control unit (21) which is coupled to said two belt tensioners (7, 31) and is adapted to activate said two belt tensioners (7, 31) in a restraint situation,
**characterized in that** said control unit (21) is connected with at least one vehicle-sensitive sensor (23)
and at least one of the following sensors:
- a sensor (23) for sensing the bodily constitution of a vehicle occupant,
- a sensor for sensing the seating position of said vehicle occupant,
- a sensor for sensing the temperature inside or outside of the vehicle,
and that said control unit (21) is configured such that it activates either one or both of said belt tensioners (7, 31) depending on the values sensed by the sensors.

3. The vehicle occupant restraint system as set forth in claim 1 or 2, **characterized in that** at least one of said two belt tensioners (7, 17; 31) comprises a force limiter (33, 35).

4. The vehicle occupant restraint system as set forth in any of the preceding claims, **characterized in that** said control unit (21) activates said belt tensioners (7, 17; 31) staggered in time in a restraint situation.

5. The vehicle occupant restraint system as set forth in any of the preceding claims, **characterized in that** at least one of said belt tensioners (7, 17; 31) is configured as a multistage pyrotechnic belt tensioner, the stages of which can be activated independently of each other.

## Revendications

1. Système de retenue de passagers d'un véhicule, comportant une sangle de ceinture (3), un enrouleur de ceinture (5), une serrure de ceinture (13), une languette d'embrochage (11),
un premier et un deuxième tendeurs de ceinture, dont le premier tendeur de ceinture est un tendeur d'enroulement (7) et le deuxième tendeur de ceinture est un tendeur de serrure (17),
et au moins une unité de commande (21) couplée aux deux tendeurs de ceinture (7, 17), qui peut activer les deux tendeurs de ceinture (7, 17) en cas de retenue,
**caractérisé en ce que** l'unité de commande (21) est reliée à au moins un capteur (23) sensible aux mouvements du véhicule
et à au moins un des capteurs suivants :
- un capteur (23) servant à déterminer la constitution physique du passager du véhicule
- un capteur servant à déterminer la position assise du passager du véhicule
- un capteur servant à déterminer la température à l'intérieur ou à l'extérieur du véhicule,
et **en ce que** l'unité de commande (21) est réalisée de manière à activer, en fonction des valeurs déterminées par les capteurs, soit l'un soit les deux tendeurs de ceinture (7, 17).

2. Système de retenue de passagers d'un véhicule, comportant une sangle de ceinture (3), un enrouleur de ceinture (5), une serrure de ceinture (13), une languette d'embrochage (11),
deux tendeurs de ceinture, dont l'un est un tendeur d'enroulement (7) et l'autre est un tendeur de ferrure terminale (31),
et au moins une unité de commande (21) couplée avec les deux tendeurs de ceinture (7, 31), qui peut activer les deux tendeurs de ceinture (7, 31) en cas de retenue,
**caractérisé en ce que** l'unité de commande (21) est reliée à au moins un capteur (23) sensible aux mouvements du véhicule
et à au moins un des capteurs suivants :
- un capteur (23) servant à déterminer la constitution physique du passager du véhicule
- un capteur servant à déterminer la position assise du passager du véhicule,
- un capteur servant à déterminer la température à l'intérieur ou à l'extérieur du véhicule,
et **en ce que** l'unité de commande (21) est réalisée de manière à activer, en fonction des valeurs déterminées par les capteurs, soit l'un soit les deux tendeurs de ceinture (7, 31).

3. Système de retenue de passagers d'un véhicule selon la revendication 1 ou 2, **caractérisé en ce qu'**au moins l'un des deux tendeurs de ceinture (7, 17 ; 31) présente un limiteur de force (33, 35).

4. Système de retenue de passagers d'un véhicule selon l'une quelconque des revendications précédentes, **caractérisé en ce qu'**en cas de retenue, l'unité de commande (21) active les tendeurs de ceinture (7, 17 ; 31) avec décalage dans le temps l'un par rapport à l'autre.

5. Système de retenue de passagers d'un véhicule selon l'une quelconque des revendications précédentes, **caractérisé en ce qu'**au moins l'un des tendeurs de ceinture (7, 17 ; 31) est réalisé sous forme de tendeur de ceinture pyrotechnique à plusieurs étages, dont les étages peuvent être déclenchés indépendamment les uns des autres.
